(19) Europäisches Patentamt
European Patent Office
Office européen des brevets

(11) **EP 3 968 648 A1**

(12) **EUROPEAN PATENT APPLICATION**
published in accordance with Art. 153(4) EPC

(43) Date of publication:
**16.03.2022 Bulletin 2022/11**

(51) International Patent Classification (IPC):
***H04N 21/2662*** (2011.01)

(21) Application number: **20914063.1**

(52) Cooperative Patent Classification (CPC):
**G06N 3/08; H04N 21/262; H04N 21/2662;
H04N 21/4402**

(22) Date of filing: **18.11.2020**

(86) International application number:
**PCT/CN2020/129671**

(87) International publication number:
**WO 2021/143344 (22.07.2021 Gazette 2021/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.01.2020 CN 202010046898**

(71) Applicant: **Beijing Dajia Internet Information
Technology Co., Ltd.
Haidian District
Beijing 100085 (CN)**

(72) Inventor: **ZHOU, Chao
Beijing 100085 (CN)**

(74) Representative: **Yang, Shu
Withers & Rogers LLP
2 London Bridge
London SE1 9RA (GB)**

(54) **BITRATE DECISION MODEL TRAINING METHOD AND ELECTRONIC DEVICE**

(57) A method for training a bit rate decision model and an electronic device are disclosed, belonging to the field of data processing. The method includes: inputting, by an electronic device, a network throughput, time length variation information of a buffer simulation module and a target decision bit rate at a previous bit rate decision moment to a first model; outputting, by the first model, a plurality of first probabilities corresponding to a plurality of first decision bit rates; determining a target decision bit rate based on the first probability; determining, by the electronic device, a first evaluation value of the target decision bit rate based on the target decision bit rate, a network throughput at a next video data transmission moment, and the time length variation information of the buffer simulation module; and updating a model parameter of the first model based on the first evaluation value.

Inputting, by an electronic device, a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment — 301

Determining, by the electronic device, a target decision bit rate at the first moment, the target decision bit rate at the first moment being a first decision bit rate whose first probability meets a first target condition — 302

Acquiring, by the electronic device, second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment — 303

Acquiring, by the electronic device, a first evaluation value based on a network throughput at the third moment, the second time length variation information, and the target decision bit rate at the first moment, the first evaluation value being an evaluation value of the target decision bit rate at the first moment — 304

Updating, by the electronic device, a model parameter of the first model based on the first evaluation value until any iteration process meets a first iteration ending condition, to obtain a bit rate decision model, the bit rate decision model being the first model obtained by the iteration process that meets the first iteration ending condition — 305

**FIG. 3**

EP 3 968 648 A1

## Description

### CROSS-REFERENCE TO RELATED APPLICATION

The present disclosure claims priority to Chinese Patent Application No. 202010046898.1, filed on January 16, 2020 and entitled "BITRATE DECISION MODEL TRAINING METHOD AND APPARATUS, ELECTRONIC DEVICE AND STORAGE MEDIUM", the entire contents of which are incorporated herein by reference.

### TECHNICAL FIELD

The present disclosure relates to the field of video live streaming, and in particular, to a method for training a bit rate decision model, and an electronic device.

### BACKGROUND

Network fluctuations have a huge impact on live video streaming. In order to avoid lagging while maintaining a certain level of clarity, an electronic device needs to adjust a video stream bit rate according to the network fluctuations.
A video bit rate is generally controlled using the following method: a bit rate of video data sent by an electronic device is adjusted to maintain the duration of cached video on a client within a given range. For example, the duration of the cached live video on the client is maintained within a range of 10s to 20s. When the duration of the cached live video is less than 10s, the bit rate of transmission is reduced, to reduce the clarity of the video, such that the same video data packet carries a live video of a longer duration; when the duration of the cached live video is longer than 20s, the bit rate of transmission is increased, to improve the clarity of the video, such that the same video data packet carries a live video of a longer duration.

### SUMMARY

The present disclosure provides a method for training a bit rate decision model and an electronic device. The technical solutions of the present disclosure are as follows.
In an aspect, a method for training a bit rate decision model is provided. The method is applied to an electronic device and includes:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;
determining a target decision bit rate at the first moment, the target decision bit rate at the first moment being a first decision bit rate whose first probability meets a first target condition;
acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;
acquiring a first evaluation value based on a network throughput at the third moment, the second time length variation information, and the target decision bit rate at the first moment, the first evaluation value being an evaluation value of the target decision bit rate at the first moment; and
updating a model parameter of the first model based on the first evaluation value until any iteration process meets a first iteration ending condition, to obtain a bit rate decision model, the bit rate decision model being the first model obtained by the iteration process that meets the first iteration ending condition.

In an aspect, a method for bit rate deciding is provided. The method is applied to an electronic device and includes:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the method for training a bit rate decision model according to claim 1.

In an aspect, an apparatus for training a bit rate decision model is provided, including:

a first probability outputting unit, configured to input a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

a first target decision bit rate determining unit, configured to determine a target decision bit rate at the first moment, the target decision bit rate at the first moment being a first decision bit rate whose first probability meets a first target condition;

a time length variation information acquiring unit, configured to acquire second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

an evaluation value acquiring unit, configured to acquire a first evaluation value based on a network throughput at the third moment, the second time length variation information, and the target decision bit rate at the first moment, the first evaluation value being an evaluation value of the target decision bit rate at the first moment; and

a model parameter updating unit, configured to update a model parameter of the first model based on the first evaluation value until any iteration process meets a first iteration ending condition, to obtain a bit rate decision model, the bit rate decision model being the first model obtained by the iteration process that meets the first iteration ending condition.

In an aspect, a bit rate deciding apparatus is provided, including:

a second probability outputting unit, configured to input a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

a second target decision bit rate determining unit, configured to determine a target decision bit rate at the fifth moment, the target decision bit rate at the fifth moment being a third decision bit rate whose third probability meets a third target condition; and

a bit rate adjusting unit, configured to adjust a bit rate of video data based on the target decision bit rate at the fifth moment, the bit rate decision model being a bit rate decision model trained by using the apparatus for training a bit rate decision model according to claim 9.

In an aspect, an electronic device is provided, including:

a processor; and
a memory configured to store an instruction executable by the processor,
wherein the processor is configured to perform the following steps:
inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;
determining a target decision bit rate at the first moment, the target decision bit rate at the first moment being a first decision bit rate whose first probability meets a first target condition;
acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

In an aspect, an electronic device is provided, including:

a processor; and

a memory configured to store an instruction executable by the processor,

wherein the processor is configured to perform the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the electronic device described in the foregoing aspect.

In an aspect, a storage medium is provided, wherein instructions in the storage medium, when executed by a processor of an electronic device, cause the electronic device to be capable of performing the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

In an aspect, a storage medium is provided, wherein instructions in the storage medium, when executed by a processor of an electronic device, cause the electronic device to be capable of performing the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the storage medium described in the foregoing aspect.

In an aspect, a computer program product is provided, wherein instructions in the computer program product, when executed by a processor of an electronic device, cause the electronic device to be capable of performing the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

In an aspect, a computer program product is provided, wherein instructions in the computer program product, when executed by a processor of an electronic device, cause the electronic device to be capable of performing the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the computer program product described in the foregoing aspect.

It should be understood that the above general description and the detailed description in the following text are only exemplary and explanatory, and should not be construed as a limitation to the present disclosure.

**BRIEF DESCRIPTION OF THE DRAWINGS**

The accompanying drawings, which are incorporated in and constitute a part of this description, illustrate the embodiments of the present disclosure and together with the description, serve to explain the principles of the present disclosure.

FIG. 1 is a schematic diagram of a video data collection type.
FIG. 2 is a schematic structural diagram of a simulated interactive environment.
FIG. 3 is a flowchart of a method for training a bit rate decision model.
FIG. 4 is a flowchart of a method for bit rate deciding.
FIG. 5 is a flowchart of a method for training a bit rate decision model.
FIG. 6 is a schematic structural diagram of an Actor network.
FIG. 7 is a schematic structural diagram of a Critic network.
FIG. 8 is a block diagram of an apparatus for training a bit rate decision model.
FIG. 9 is a block diagram of a bit rate deciding apparatus.
FIG. 10 is a structural diagram of an electronic device.
FIG. 11 is a structural diagram of an electronic device.
FIG. 12 is a sample graph of bandwidth over time.

**DETAILED DESCRIPTION**

To make those of ordinary skill in the art better understand the technical solutions of the present disclosure, the following clearly and completely describes the technical solutions in the embodiments of the present disclosure with reference to the accompanying drawings.

It should be noted that the terms "first", "second", and so on in the specification and claims of the present disclosure and in the accompanying drawings are intended to distinguish between similar objects but do not necessarily indicate a specific order or sequence. It should be understood that the data used in such a way may be exchanged under proper conditions to make it possible to implement the described embodiments of present disclosure in sequences except those illustrated or described herein. The implementation manners described in the following exemplary embodiments of the present disclosure do not represent all implementation manners consistent with the present disclosure. On the contrary, they are only embodiments of an apparatus and a method detailed in the appended claims and consistent with some aspects of the present disclosure.

Terms in the present disclosure are illustrated hereinafter:

A bit rate is used for indicating how much information is contained in a video block of a certain time length. The video with a higher bit rate at the same compression ratio has higher definition.

A buffer is used for storing video data that has not been sent yet. The size of the buffer is limited. In the field of live streaming, it is desirable to control the video data stored in the buffer to be as small as possible to ensure real-time live streaming.

A network throughput refers to the amount of data transmitted per unit of time.

In embodiments of the present disclosure, a bit rate decision model is trained to predict a bit rate required at a next moment based on network transmission information of a previous moment. The method for training a bit rate decision model in the embodiments of the present disclosure is described below. The method for training a bit rate decision model includes three processes: data collection, training environment creating, and training.

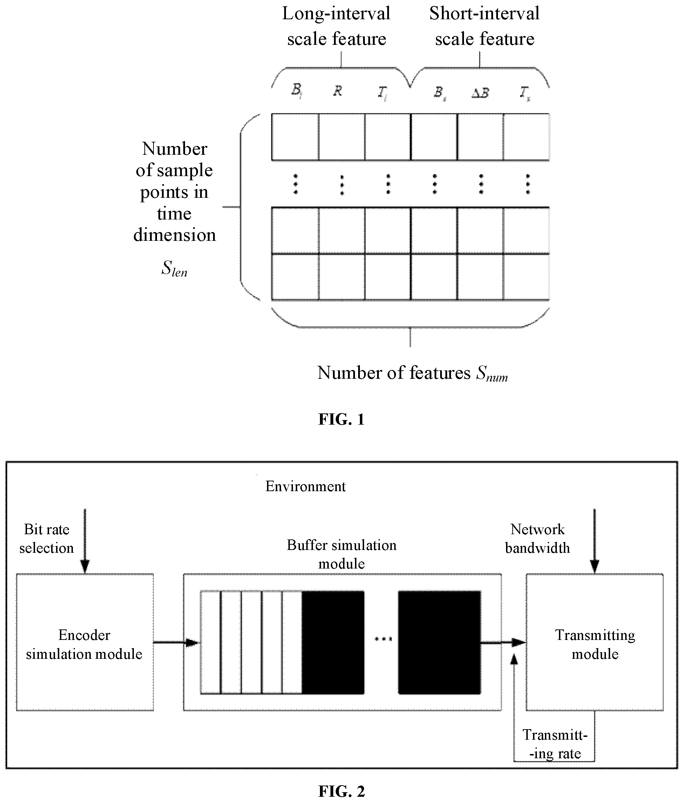

In the data collection process, in some embodiments, an electronic device acquires multiple pieces of related information for indicating a video transmission environment in a data transmission process of the electronic device. The related information includes, but not limited to, a historical network throughput $W$, buffer time length information $B$, a historical bit rate decision $R$, and historical buffer time length variation information $\Delta B$. The related information described above may correspond to different data collection time scales. For example, the data collection time scales may include a long interval and a short interval. The long interval is a time interval between two bit rate decisions, and a short interval is a time interval between two adjacent video frames. Certainly, the duration of the long interval and the duration of the short interval may be set according to actual requirements, which are not limited in the embodiments of the present disclosure. A bit rate decision refers to a manner of adjusting a current bit rate. For example, the form of data collection may be as shown in FIG. 1. The electronic device can collect network throughputs $W$ of the long interval and the short interval simultaneously, which are denoted by $W_L$ and $W_S$ respectively, and can also collect buffer time length information $B$ of the long interval and the short interval simultaneously, which are denoted by $B_L$ and $B_S$ respectively. For the historical bit rate decision $R$, the electronic device may only collect data in the long interval, which is denoted by $R_L$; and for the historical buffer time length variation information $\Delta B$, the electronic device may only collect data in the short interval, which is denoted by $\Delta B_S$. In the foregoing data collection process, the electronic device acquires data of different time scales, which has different meanings for the bit rate decision. Information in the short interval can be used for handling sudden situations in the bit rate decision, while information in the long interval enables the bit rate decision model to capture global information of data, to reduce incorrect decisions.

In the training environment creating process, in some embodiments, a basic model architecture adopts any neural network, for example, deep deterministic policy gradient (DDPG), asynchronous advantage actor-critic (A3C), or policy gradients, which is not limited in the embodiments of the present disclosure.

In some embodiments, if the bit rate decision model is trained in a real environment during actual model training, an actual interaction time is synchronized with the real time. In this case, the bit rate decision model experiences very limited environment changes, resulting in low training efficiency of the bit rate decision model. In embodiments of the present disclosure, the training process of the bit rate decision model can adopt a method of interaction between a simulated interactive environment and the model (a method of interaction between a simulated interactive environment and a model is used in embodiments of the present disclosure). Based on this, a simulated interactive environment can be created to simulate actual variations of the network throughput. The electronic device inputs collected records of the real network throughput over time into the simulated interactive environment. The simulated interactive environment sends video data according to the collected real network throughput and acquires related information of a current video transmission environment. The bit rate decision model outputs a corresponding bit rate decision based on the related information of the video transmission environment acquired from the simulated interactive environment. After that, a decision evaluation model outputs an evaluation value according to the decision bit rate outputted by the bit rate decision model. As the bit rate decisions made by the bit rate decision model will affect the simulated interactive environment, the simulated interactive environment will change, and finally the related information fed to the decision evaluation model will also change. The whole training process is the repetition of the above interactions. In some embodiments, the obtained evaluation value is a reward function that helps the bit rate decision to learn the bit rate decision. In some embodiments, the structure of the simulated interactive environment is shown in FIG. 2, including three modules: an encoder simulation module, a buffer simulation module, and a transmitting simulation module.

The encoder simulation module is configured to receive a bit rate prediction from the bit rate decision model and send video data of the corresponding bit rate to the buffer simulation module. It should be noted that the size of the video data is affected by the size of each frame in the video data in addition to the bit rate. The encoder simulation module can encode the video data to make the size of the video data fluctuate randomly within a certain range that satisfies a bit rate constraint. It is also necessary to set a bit rate and a video data size that match the actual live video on the encoder simulation module.

The buffer simulation module is configured to receive and send video data. The buffer simulation module may be implemented based on a limited-capacity queue. The buffer simulation module receives the video data from the encoder simulation module at certain frame intervals and sends the video data to the transmitting simulation module.

The transmitting simulation module is configured to receive a virtual network throughput, wherein the virtual network throughput is used for simulating the variation of an actual available bandwidth of the network. In some embodiments, the virtual network throughput is a pre-collected record of the real bandwidth over time. The transmitting simulation module is also configured to send the video data from the buffer simulation module based on the limit of the network throughput, thereby achieving the purpose of consuming the video data in the buffer simulation module at a rate determined by the network throughput.

In some embodiments, the encoder simulation module sends video data of a fixed time length to the buffer simulation module at a time. The decision bit rate outputted by the bit rate decision model results in a change in the size of a single piece of video data. For example, if the duration of a piece of video data is 10s, the current video data size is 50 kilobytes (KB), and the decision bit rate outputted by the bit rate decision model at the next moment is 0.7, the electronic device changes the current bit rate of the video data to be 0.7 times the bit rate at the previous moment, and accordingly, the size of a piece of video data becomes $50 \times 0.7 = 35$ KB.

In some embodiments, the network throughput fluctuates over time. Extracting video data from the buffer simulation module based on the network throughput means that the transmitting simulation module does not extract video data from the buffer simulation module randomly, and the speed of video data extraction depends on the current network throughput. For example, if the current network throughput is 1000 KB/s, it means that the transmitting simulation module can extract 1000 KB of video data per second from the buffer simulation module. If the size of a single piece of video data is 50 KB, the transmitting simulation module can extract 20 pieces of video data per second; if the size of a piece of video data is 25 KB, the transmitting simulation module can extract 40 pieces of video data per second. The remaining capacity of the buffer simulation module changes from time to time. If the current network throughput is small, the transmitting simulation module extracts video data from the buffer simulation module at a lower speed. In this case, since the amount of video data send by the encoder simulation module to the buffer is fixed, the amount of data stored in the buffer simulation module increases, and accordingly, the remaining capacity of the buffer decreases.

In some embodiments, if the video data in the buffer simulation module reaches the capacity limit of the buffer simulation module, the video data is discarded based on the "first-in, first-out" principle.

In the training process, the embodiments of the present disclosure provide a model training process based on a simulated interactive environment. The basic conception is as follows: the electronic device makes a bit rate decision by inputting sample data to a first model, and the first model outputs a decision bit rate; the electronic device inputs the decision bit rate to the simulated interactive environment, and the simulated interactive environment adjusts a transmitting bit rate of video data based on the received decision bit rate. The electronic device acquires time length variation information of the buffer simulation module in the simulated interactive environment in the foregoing process, and inputs the time length variation information of the buffer simulation module, the decision bit rate, and the network throughput to a second model, such that the second model outputs an evaluation value. The electronic device updates a model parameter of the first model based on the evaluation value. The first model, the simulated interactive environment, and the second model interact continuously, to finally obtain the bit rate decision model. The bit rate decision model is capable of predicting a decision bit rate based on related information of the video transmission environment. For the training process of the bit rate decision model, refer to steps 501 to 507.

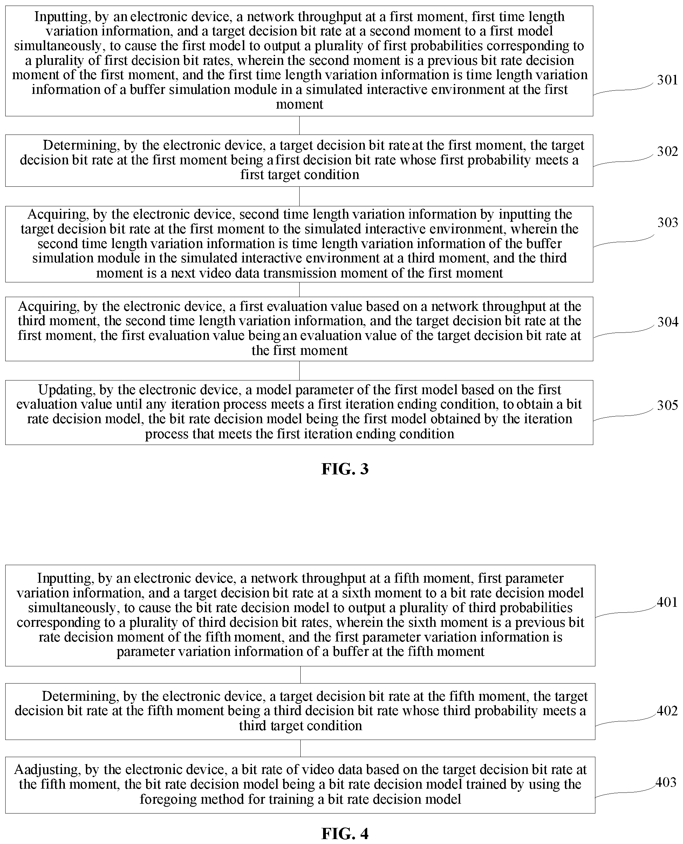

FIG. 3 is a flowchart of a method for training a bit rate decision model. The method is applied to an electronic device, and as shown in FIG. 3, includes the following steps:

In 301, the electronic device inputs a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment.

In 302, the electronic device determines a target decision bit rate at the first moment, the target decision bit rate at the first moment being a first decision bit rate whose first probability meets a first target condition.

In 303, the electronic device acquires second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment.

In 304, the electronic device acquires a first evaluation value based on a network throughput at the third moment, the second time length variation information, and the target decision bit rate at the first moment, the first evaluation value being an evaluation value of the target decision bit rate at the first moment.

In 305, the electronic device updates a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the simulated interactive environment further includes an encoder simulation module and a transmitting simulation module, and the step of acquiring second time length variation information by inputting the target decision bit rate at the first moment to the simulated interactive environment includes:

inputting the target decision bit rate at the first moment to the encoder simulation module, to cause the encoder simulation module to transmit video data of the target decision bit rate at the first moment to the buffer simulation module;

extracting the video data from the buffer simulation module based on a rate indicated by the transmitting simulation module; and

acquiring the second time length variation information based on a storage capacity difference of the buffer simulation module for the video data between the first moment and the third moment.

In some embodiments, the network throughput includes a first network throughput and a second network throughput, the first network throughput is a network throughput captured within a time range of an interval between two video frames, and the second network throughput is a network throughput within a bit rate decision interval.

The time length variation information of the buffer simulation module includes first buffer time length variation information and second buffer time length variation information, the first buffer time length variation information is buffer time length variation information captured within the time range of the interval between two video frames, and the second buffer time length variation information is buffer time length variation information within the bit rate decision interval.

In some embodiments, the step of acquiring a first evaluation value of the target decision bit rate at the first moment based on a network throughput at the third moment, the second time length variation information, and the target decision bit rate at the first moment includes:

inputting the network throughput at the third moment, the second time length variation information, and the target decision bit rate at the first moment to a second model simultaneously, to cause the second model to output the first evaluation value.

In some embodiments, after the step of updating a model parameter of the first model based on the first evaluation value, the method further includes:

inputting the network throughput at the third moment, the second time length variation information, and the target decision bit rate at the first moment to the first model simultaneously to obtain a target decision bit rate at the third moment; and

updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

In some embodiments, before the step of inputting a network throughput at a first moment, first time length variation information, and a target decision bit rate at a second moment to a first model simultaneously, the method further includes:

inputting sample data to the first model in a first model training process, to cause the first model to output a plurality of second probabilities corresponding to a plurality of second decision bit rates, the sample data including a historical decision bit rate, historical buffer time length information, historical buffer time length variation information, and a historical network throughput;

determining a sample target bit rate, the sample target bit rate being a second decision bit rate whose second probability meets a second target condition;

acquiring sample time length variation information of the buffer simulation module in the simulated interactive environment by inputting the sample target bit rate to the simulated interactive environment;

inputting the sample target bit rate, the sample time length variation information, and a network bandwidth at a next video data transmission moment to a second model, to cause the second model to output a second evaluation value; and

updating the model parameter of the first model based on the second evaluation value.

FIG. 4 is a flowchart of a method for bit rate deciding. The method is applied to an electronic device, and as shown in FIG. 4, includes the following steps:

In 401, the electronic device inputs a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment.

In 402, the electronic device determines a target decision bit rate at the fifth moment, the target decision bit rate at the fifth moment being a third decision bit rate whose third probability meets a third target condition.

In some embodiments, the third probability meeting the third target condition means that the third probability is the highest among the plurality of third probabilities.

In 403, the electronic device adjusts a bit rate of video data based on the target decision bit rate at the fifth moment, the bit rate decision model being a bit rate decision model trained by using the foregoing method for training a bit rate decision model.

In some embodiments, after the step of adjusting a bit rate of video data based on the target decision bit rate at the fifth moment, the method further includes:

updating a model parameter of the bit rate decision model based on the target decision bit rate at the fifth moment and a network throughput at a seventh moment, the seventh moment being a next video data transmission moment of the fifth moment.

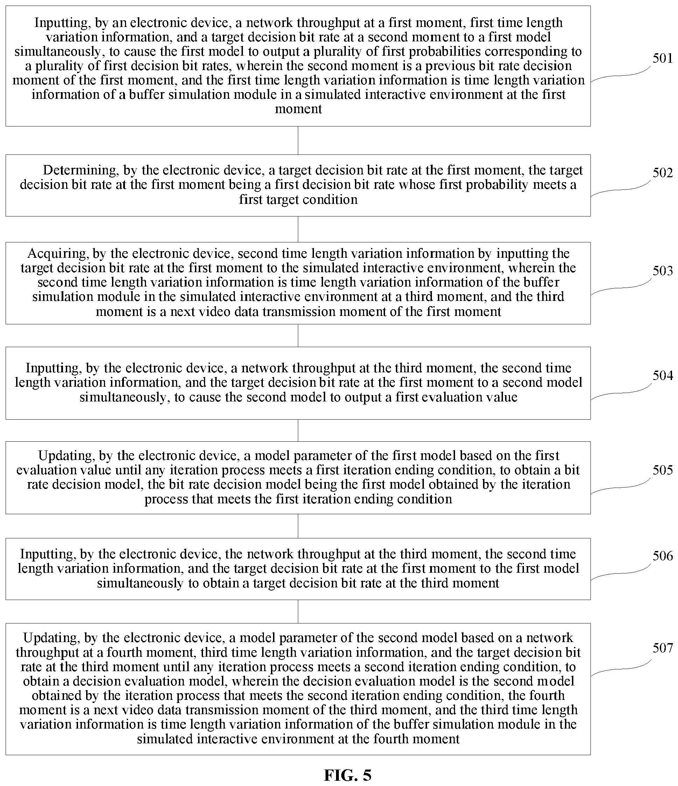

FIG. 5 is a flowchart of a method for training a bit rate decision model. As shown in FIG. 5, the method is applied to an electronic device, and includes the following steps:

In 501, the electronic device inputs a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment.

In some embodiments, the electronic device forms a first parameter matrix by using the network throughput at the first moment, the first time length variation information, and the target decision bit rate at the second moment, and inputs the first parameter matrix to the first model. The parameter matrix is multiplied by at least one weight matrix of the first model, to obtain a plurality of first feature vectors, and the plurality of first feature vectors are mapped to a plurality of first probabilities. For example, if the network throughput W at the first moment is 500 Kbps, the target decision bit rate R at the second moment is 0.7, and the first time length variation information $\Delta B$ is 3%, the electronic device generates a one-dimensional first parameter matrix $[500, 0.7, 3]^T$. The electronic device multiplies the weight matrix $[0.2, 1, 0.3]$ with the first parameter matrix, to obtain first feature vectors $[10, 0.7, 0.9]^T$, and maps the first feature vectors to a plurality of first probabilities, e.g., $[0.76, 0.05, 0.07]^T$, through a normalization function (SoftMax), wherein numbers in the first feature vectors represent probabilities of the corresponding first decision bit rates.

It should be noted that, in some embodiments, an interval between the first moment and the second moment is set in advance, and switching is performed directly at a regular time. In some embodiments, the interval between the first moment and the second moment is determined by the electronic device in real time, which is not limited in the embodiments of the present disclosure. In some embodiments, the first decision bit rate is a multiple of bit rate adjustment or a bit rate value. If the first decision bit rate is a multiple of bit rate adjustment, the first probabilities outputted by the bit rate decision model correspond to different bit rate adjustment multiples, such as 0.7, 0.8, 0.9, 1.0, 1.05, 1.1, and 1.15, wherein each number indicates a multiple for adjusting the bit rate at the previous moment to be the bit rate of the current video data. If 0.7 among the plurality of first decision bit rates corresponds to the highest first probability, the electronic device adjusts the bit rate of the current video data to be 0.7 times the bit rate at the previous moment through the encoder simulation module.

In 502, the electronic device determines a target decision bit rate at the first moment, the target decision bit rate at the first moment being a first decision bit rate whose first probability meets a first target condition.

In some embodiments, the first probability meeting the first target condition means that the first probability is the highest among the plurality of third probabilities.

In 503, the electronic device acquires second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment.

In some embodiments, the simulated interactive environment further includes an encoder simulation module and a transmitting simulation module. The electronic device inputs the target decision bit rate at the first moment to the encoder simulation module, to cause the encoder simulation module to transmit video data of the target decision bit rate at the first moment to the buffer simulation module. The electronic device extracts the video data from the buffer simulation module based on a rate indicated by the transmitting simulation module. The electronic device acquires the second time length variation information based on a storage capacity difference of the buffer simulation module for the video data between the first moment and the third moment.

In 504, the electronic device inputs a network throughput at the third moment, the second time length variation information, and the target decision bit rate at the first moment to a second model simultaneously, to cause the second model to output a first evaluation value.

In some embodiments, the electronic device forms a second parameter matrix by using the network throughput at the third moment, the second time length variation information, and the target decision bit rate at the first moment. The electronic device inputs the second parameter matrix to the second model, operation is performed on the second parameter matrix by using at least one weight matrix of the second model, to obtain a plurality of second feature vectors, and the plurality of second feature vectors are mapped to a first evaluation value.

For example, if the network throughput W at the third moment is 450 Kbps, the target decision bit rate R at the first moment is 0.5, and the time length variation information $\Delta B$ of the buffer simulation module at the third moment is 2%, the electronic device generates a one-dimensional second parameter matrix $[450, 0.5, 2]^T$. The electronic device multiplies the weight matrix $[0.1, 1, 0.5]$ with the second parameter matrix, to obtain second feature vectors $[4.5, 0.5, 1]^T$, and maps the second feature vectors to a first evaluation value, such as 0.6, through a sigmoid growth curve (Sigmoid).

In 505, the electronic device updates a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the electronic device updates the at least one weight matrix of the first model based on the first evaluation value, until a function value of a loss function of the first model is lower than a target threshold or the number of iterations reaches a target count, and at this point, the training of the first model is finished, and the bit rate decision model is obtained, wherein the target threshold and the target count may be set according to actual situations, which are not limited in the embodiments of the present disclosure.

In 506, the electronic device inputs the network throughput at the third moment, the second time length variation information, and the target decision bit rate at the first moment to the first model simultaneously to obtain a target decision bit rate at the third moment.

The method for determining the target decision bit rate at the third moment by the electronic device belongs to the same inventive conception as the method for determining the target decision bit rate at the first moment, and is not described in detail herein.

In 507, the electronic device updates a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

It should be noted that, before 501 to 507, that is, in the training process of the first model, parameter information of each part in the simulated interactive environment has not been generated yet. Therefore, in some embodiments, the electronic device inputs sample data to the first model, to cause the first model to output a plurality of second probabilities corresponding to a plurality of second decision bit rates, the sample data including a historical decision bit rate, historical buffer time length information, historical buffer time length variation information, and a historical network throughput. The electronic device determines a sample target bit rate, the sample target bit rate being a second decision bit rate whose second probability meets a second target condition. The electronic device acquires sample time length variation information of the buffer simulation module in the simulated interactive environment by inputting the sample target bit rate to the simulated interactive environment. The electronic device inputs the sample target bit rate, the sample time length variation information, and a network bandwidth at a next video data transmission moment to the second model, to cause the second model to output a second evaluation value. The electronic device updates the model parameter of the first model based on the second evaluation value. In some embodiments, the second probability meeting the second target condition means that the second probability is the highest among the plurality of second probabilities.

In some embodiments, the sample data is from a user terminal watching the video or from a server. The source of the sample data is not limited in the embodiments of the present disclosure.

In some embodiments, the electronic device can train a plurality of bit rate decision models based on different network bandwidths, and obtain parameters of a primary bit rate decision model based on model parameters of the plurality of bit rate decision models obtained through training. The primary bit rate decision model is the bit rate decision model that makes the bit rate decision in the live streaming process. For example, each of the bit rate decision models can acquire a first reference number of training parameters. The training parameters at least include representing a video transmission environment an evaluation value corresponding to the related information representing the video transmission environment. The electronic device sends the first reference number of training parameters to the primary bit rate decision model through each of the bit rate decision models, and updates the model parameters of the primary bit rate decision model based on the first reference number of training parameters. Then, the electronic device sends the updated model parameters to each of the bit rate decision models through the primary bit rate decision model. The electronic device controls each of the bit rate decision models to replace the model parameters with the received model parameters, and then continues the training in different simulated interactive environments. The foregoing steps are repeated until the electronic device updates the model parameters of the primary bit rate decision model for a reference number of times, and then the training is finished. The reference number of times may be set according to actual requirements, and is not limited in the embodiments of the present disclosure. It should be noted that, the training of the primary bit rate decision model provided in the embodiments of the present disclosure can be finished after the model parameters are updated for the reference number of times as described above; alternatively, time for stopping the training can also be determined based on the loss function of the model, which is not limited in the embodiments of the present disclosure.

The method for training a bit rate decision model provided by the embodiments of the present disclosure is illustrated by using an asynchronous update reinforcement model (actor-critic). The bit rate decision model is an Actor network, and the decision evaluation model is a Critic network. The Critic network is for outputting evaluation values based on time length variation information of the buffer simulation module in the simulated interactive environment obtained by selecting different bit rates at different network throughputs. The Actor network adjusts the model parameters based on the evaluation values outputted by the Critic network. The Critic network adjusts the model parameters based on the related information representing the video transmission environment at the current moment and the decision bit rate at the previous moment. In other words, the Critic network evaluates the decision bit rate outputted by the Actor network, and the Actor network uses the evaluation value outputted by the Critic network as a training target.

In some embodiments, the Actor network adjusts the model parameters through the following formula (1), and the Critic network adjusts the model parameters through the following formula (2):

$$\theta_a \leftarrow \theta_{a_0} + \alpha_a \sum\nolimits_t \nabla_\theta \log \pi_\theta (s_t, a_t) A (s_t, a_t) \qquad (1)$$

$$\theta_c \leftarrow \theta_{c_0} - \alpha_c \sum\nolimits_t \nabla_{\theta_v} (r_t + \gamma V^{\pi\theta}(s_{t+1}; \ \theta_c) - V^{\pi\theta}(s_t; \ \theta_v))^2 \qquad (2)$$

wherein $\theta_a$ is a parameter of the Actor network, $\alpha_a$ is a learning rate of the Actor network, $\pi_\theta$ (st, at) is a bit rate prediction of the Actor network, and A (st, at) is an evaluation value outputted by the Critic network; $\theta_c$ is a parameter of the Critic network, $\alpha_c$ is a learning rate of the Critic network, $V^{\pi\theta}(s_t, \theta c)$ is an evaluation value outputted by the Critic network based on network transmission information $s_t$ at the moment t and the current parameter $\theta_c$ of the Critic network.

In some embodiments, during the bit rate decision, only the Actor network is in the active state, while during training, both the Actor network and the Critic network are in the active state.

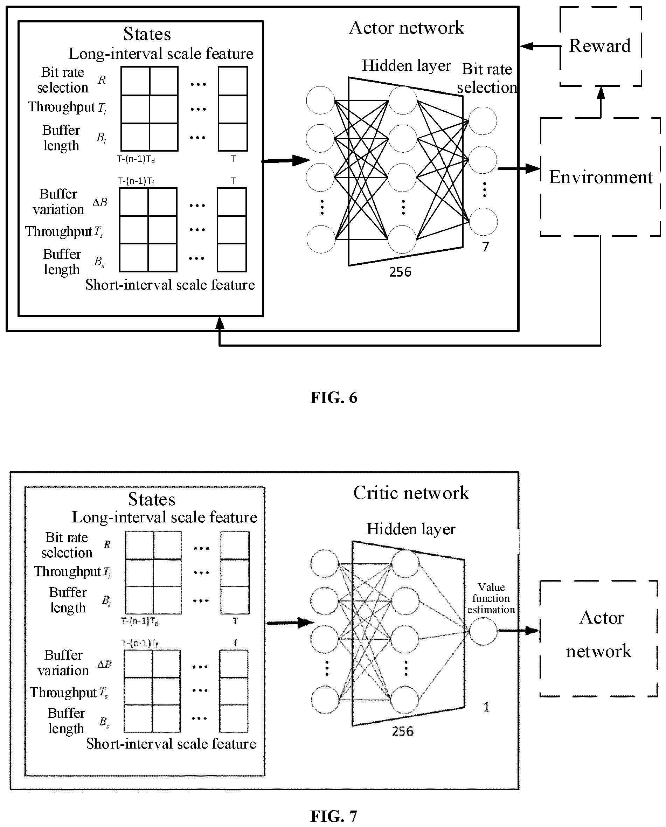

In some embodiments, the last output layer of the Critic network is different from that of the Actor network. The last layer of the Critic network is a linear output layer without an activation function; the last output layer of the Actor network is a SoftMax output layer. Except for the last output layer, all other structures of the Critic network and the Actor network are the same. In some embodiments, the structure of the Actor network is shown in FIG. 6, and the structure of the Critic network is as shown in FIG. 7. It should be noted that, the structures of the Critic network and the Actor network may be designed based on the actual situation, and are not limited in the embodiments of the present disclosure.

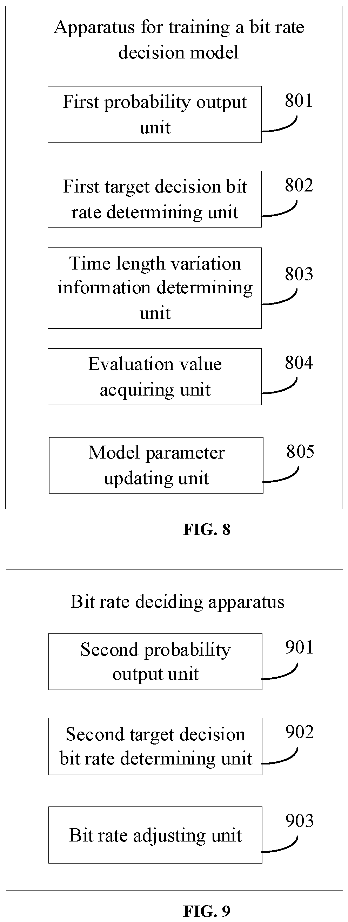

FIG. 8 is a block diagram of an apparatus for training a bit rate decision model. Referring to FIG. 8, the apparatus includes a first probability outputting unit 801, a first target decision bit rate determining unit 802, a time length variation information determining unit 803, an evaluation value acquiring unit 804, and a model parameter updating unit 805.

The first probability outputting unit 801 is configured to input a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment.

The first target decision bit rate determining unit 802 is configured to determine a target decision bit rate at the first moment, the target decision bit rate at the first moment being a first decision bit rate whose first probability meets a first target condition.

The time length variation information acquiring unit 803 is configured to acquire second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment.

The evaluation value acquiring unit 804 is configured to acquire a first evaluation value based on a network throughput at the third moment, the second time length variation information, and the target decision bit rate at the first moment, the first evaluation value being an evaluation value of the target decision bit rate at the first moment.

The model parameter updating unit 805 is configured to update a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the simulated interactive environment further includes an encoder simulation module and a transmitting simulation module, and the time length variation information acquiring unit includes:

a video data transmitting subunit, configured to input the target decision bit rate at the first moment to the encoder simulation module, to cause the encoder simulation module to transmit video data of the target decision bit rate at the first moment to the buffer simulation module;

a video data extracting subunit, configured to extract the video data from the buffer simulation module based on a rate indicated by the transmitting simulation module; and

a time length variation information acquiring subunit, configured to acquire the second time length variation information based on a storage capacity difference of the buffer simulation module for the video data between the first moment and the third moment.

In some embodiments, the network throughput includes a first network throughput and a second network throughput, the first network throughput is a network throughput captured within a time range of an interval between two video frames, and the second network throughput is a network throughput within a bit rate decision interval.

The time length variation information of the buffer simulation module includes first buffer time length variation information and second buffer time length variation information, the first buffer time length variation information is buffer time length variation information captured within the time range of the interval between two video frames, and the second buffer time length variation information is buffer time length variation information within the bit rate decision interval.

In some embodiments, the evaluation value acquiring unit is configured to input the network throughput at the third moment, the second time length variation information, and the target decision bit rate at the first moment to a second model simultaneously, to cause the second model to output the first evaluation value.

In some embodiments, the apparatus further includes:

a third moment target bit rate decision determining unit, configured to input the network throughput at the third moment, the second time length variation information, and the target decision bit rate at the first moment to the first model simultaneously to obtain a target decision bit rate at the third moment; and

a decision evaluation model determining unit, configured to update a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

In some embodiments, the first probability outputting unit is further configured to input sample data to the first model in a first model training process, to cause the first model to output a plurality of second probabilities corresponding to a plurality of second decision bit rates, the sample data including a historical decision bit rate, historical buffer time length information, historical buffer time length variation information, and a historical network throughput.

The target decision bit rate determining unit at the first moment is further configured to determine a sample target bit rate, the sample target bit rate being a second decision bit rate whose second probability meets a second target condition.

The time length variation information acquiring unit is further configured to acquire sample time length variation information of the buffer simulation module in the simulated interactive environment by inputting the sample target bit rate to the simulated interactive environment.

The evaluation value acquiring unit is further configured to input the sample target bit rate, the sample time length variation information, and a network bandwidth at a next video data transmission moment to a second model, to cause the second model to output a second evaluation value.

The model parameter updating unit is further configured to update the model parameter of the first model based on the second evaluation value.

Manners of operations performed by the modules in the foregoing apparatus have been described in detail in the related method, and details are not described herein again.

FIG. 9 is a block diagram of a bit rate deciding apparatus. Referring to FIG. 9, the apparatus includes a second probability outputting unit 901, a second target decision bit rate determining unit 902, and a bit rate adjusting unit 903.

The second probability outputting unit 901 is configured to input a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment.

The second target decision bit rate determining unit 902 is configured to determine a target decision bit rate at the fifth moment, the target decision bit rate at the fifth moment being a third decision bit rate whose third probability meets a third target condition.

The bit rate adjusting unit 903 is configured to adjust a bit rate of video data based on the target decision bit rate at the fifth moment, the bit rate decision model being a bit rate decision model trained by using the foregoing apparatus for training a bit rate decision model.

In some embodiments, the apparatus further includes:

a bit rate decision model updating unit, configured to update a model parameter of the bit rate decision model based on the target decision bit rate at the fifth moment and a network throughput at a seventh moment, the seventh moment being a next video data transmission moment of the fifth moment.

Manners of operations performed by the modules in the apparatus in the foregoing embodiment have been described in detail in the embodiments of the related method, and details are not described herein again.

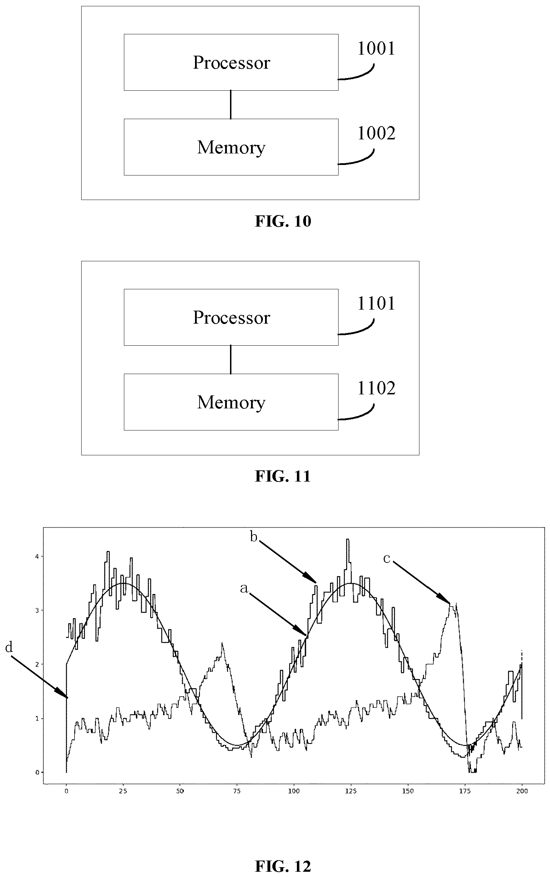

Based on the same conception, an embodiment of the present disclosure further provides an electronic device. As shown in FIG. 10, the electronic device includes:

a processor 1001; and
a memory 1002 configured to store an instruction executable by the processor 1001,
wherein the processor 1001 is configured to perform the following steps:
inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;
determining a target decision bit rate at the first moment, the target decision bit rate at the first moment being a first decision bit rate whose first probability meets a first target condition;
acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;
acquiring a first evaluation value based on a network throughput at the third moment, the second time length variation information, and the target decision bit rate at the first moment, the first evaluation value being an evaluation value of the target decision bit rate at the first moment; and
updating a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the simulated interactive environment further includes an encoder simulation module and a transmitting simulation module, and the processor 1001 is configured to perform the following steps:

inputting the target decision bit rate at the first moment to the encoder simulation module, to cause the encoder simulation module to transmit video data of the target decision bit rate at the first moment to the buffer simulation module;

extracting the video data from the buffer simulation module based on a rate indicated by the transmitting simulation module; and

acquiring the second time length variation information based on a storage capacity difference of the buffer simulation module for the video data between the first moment and the third moment.

In some embodiments, the network throughput includes a first network throughput and a second network throughput, the first network throughput is a network throughput captured within a time range of an interval between two video frames, and the second network throughput is a network throughput within a bit rate decision interval.

The time length variation information of the buffer simulation module includes first buffer time length variation information and second buffer time length variation information, the first buffer time length variation information is buffer time length variation information captured within the time range of the interval between two video frames, and the second buffer time length variation information is buffer time length variation information within the bit rate decision interval.

In some embodiments, the processor 1001 is configured to perform the following steps:

inputting the network throughput at the third moment, the second time length variation information, and the target decision bit rate at the first moment to a second model simultaneously, to cause the second model to output the first evaluation value.

In some embodiments, the processor 1001 is configured to perform the following steps:

inputting the network throughput at the third moment, the second time length variation information, and the target decision bit rate at the first moment to the first model simultaneously to obtain a target decision bit rate at the third moment; and

updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

In some embodiments, the processor 1001 is configured to perform the following steps:

inputting sample data to the first model in a first model training process, to cause the first model to output a plurality of second probabilities corresponding to a plurality of second decision bit rates, the sample data including a historical decision bit rate, historical buffer time length information, historical buffer time length variation information, and a historical network throughput;

determining a sample target bit rate, the sample target bit rate being a second decision bit rate whose second probability meets a second target condition;

acquiring sample time length variation information of the buffer simulation module in the simulated interactive environment by inputting the sample target bit rate to the simulated interactive environment;

inputting the sample target bit rate, the sample time length variation information, and a network bandwidth at a next video data transmission moment to a second model, to cause the second model to output a second evaluation value; and

updating the model parameter of the first model based on the second evaluation value.

Based on the same conception, an embodiment of the present disclosure further provides an electronic device. As shown in FIG. 11, the electronic device includes:

a processor 1101; and

a memory 1102 configured to store an instruction executable by the processor 1101,

wherein the processor 1101 is configured to perform the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the electronic device according to claim 17.

In some embodiments, the processor 1101 is configured to perform the following steps:
updating a model parameter of the bit rate decision model based on the target decision bit rate at the fifth moment and a network throughput at a seventh moment, the seventh moment being a next video data transmission moment of the fifth moment.

In some embodiments, the processor may be a central processing unit (CPU), or may be another general-purpose processor, a digital signal processor (DSP), an application specific integrated circuit (ASIC), a field-programmable gate array (FPGA) or another programmable logic device, a discrete gate, a transistor logic device, a discrete hardware component, etc. The general purpose processor may be a microprocessor or any conventional processor, or the like. It should be noted that, the processor may be a processor that supports advanced RISC machines (ARM) architecture.

In some embodiments, the memory may include a read-only memory (ROM) and a random access memory (RAM), and provide instructions and data to the processor. The memory may further include a non-volatile RAM. For example, the storage device may also store information about the device type.

The memory may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of illustration, but not limitation, many forms of RAM are available, for example, a static RAM (SRAM), a dynamic random access memory (DRAM), a synchronous DRAM (SDRAM), a double data random SDRAM (DDR SDRAM), enhanced SDRAM (ESDRAM), synchlink DRAM (SLDRAM), and direct rambus RAM (DRRAM).

The present disclosure provides a storage medium. Instructions in the storage medium, when executed by a processor of an electronic device, cause the electronic device to be capable of performing the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the simulated interactive environment further includes an encoder simulation module and a transmitting simulation module, and the electronic device is configured to perform the following steps:

inputting the target decision bit rate at the first moment to the encoder simulation module, to cause the encoder simulation module to transmit video data of the target decision bit rate at the first moment to the buffer simulation module;

extracting the video data from the buffer simulation module based on a rate indicated by the transmitting simulation module; and

acquiring the second time length variation information based on a storage capacity difference of the buffer simulation module for the video data between the first moment and the third moment.

In some embodiments, the network throughput includes a first network throughput and a second network throughput, the first network throughput is a network throughput captured within a time range of an interval between two video frames, and the second network throughput is a network throughput within a bit rate decision interval.

The time length variation information of the buffer simulation module includes first buffer time length variation information and second buffer time length variation information, the first buffer time length variation information is buffer time length variation information captured within the time range of the interval between two video frames, and the second buffer time length variation information is buffer time length variation information within the bit rate decision interval.

In some embodiments, the electronic device is configured to perform the following steps:
inputting the network throughput at the third moment, the second time length variation information, and the target decision bit rate at the first moment to a second model simultaneously, to cause the second model to output the first evaluation value.

In some embodiments, the electronic device is configured to perform the following steps:

inputting the network throughput at the third moment, the second time length variation information, and the target decision bit rate at the first moment to the first model simultaneously to obtain a target decision bit rate at the third moment; and

updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

In some embodiments, the electronic device is configured to perform the following steps:

inputting sample data to the first model in a first model training process, to cause the first model to output a plurality of second probabilities corresponding to a plurality of second decision bit rates, the sample data including a historical decision bit rate, historical buffer time length information, historical buffer time length variation information, and a historical network throughput;

determining a sample target bit rate, the sample target bit rate being a second decision bit rate whose second probability meets a second target condition;

acquiring sample time length variation information of the buffer simulation module in the simulated interactive environment by inputting the sample target bit rate to the simulated interactive environment;

inputting the sample target bit rate, the sample time length variation information, and a network bandwidth at a next video data transmission moment to a second model, to cause the second model to output a second evaluation value; and

updating the model parameter of the first model based on the second evaluation value.

The present disclosure provides a storage medium. Instructions in the storage medium, when executed by a processor of an electronic device, cause the electronic device to be capable of performing the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the electronic device according to claim 17.

In some embodiments, the electronic device is configured to perform the following steps:
updating a model parameter of the bit rate decision model based on the target decision bit rate at the fifth moment and a network throughput at a seventh moment, the seventh moment being a next video data transmission moment of the fifth moment.

The present disclosure provides a computer program product. Instructions in the computer program product, when executed by a processor of an electronic device, can cause the processer or the electronic device to perform the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;
determining a target decision bit rate at the first moment, the target decision bit rate at the first moment being a first decision bit rate whose first probability meets a first target condition;
acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;
acquiring a first evaluation value based on a network throughput at the third moment, the second time length variation information, and the target decision bit rate at the first moment, the first evaluation value being an evaluation value of the target decision bit rate at the first moment; and
updating a model parameter of the first model based on the first evaluation value until any iteration process meets a first iteration ending condition, to obtain a bit rate decision model, the bit rate decision model being the first model obtained by the iteration process that meets the first iteration ending condition.

In some embodiments, the simulated interactive environment further includes an encoder simulation module and a transmitting simulation module, and the processor or the electronic device is configured to perform the following steps:

inputting the target decision bit rate at the first moment to the encoder simulation module, to cause the encoder simulation module to transmit video data of the target decision bit rate at the first moment to the buffer simulation module;
extracting the video data from the buffer simulation module based on a rate indicated by the transmitting simulation module; and
acquiring the second time length variation information based on a storage capacity difference of the buffer simulation module for the video data between the first moment and the third moment.

In some embodiments, the network throughput includes a first network throughput and a second network throughput, the first network throughput is a network throughput captured within a time range of an interval between two video frames, and the second network throughput is a network throughput within a bit rate decision interval.
The time length variation information of the buffer simulation module includes first buffer time length variation information and second buffer time length variation information, the first buffer time length variation information is buffer time length variation information captured within the time range of the interval between two video frames, and the second buffer time length variation information is buffer time length variation information within the bit rate decision interval.
In some embodiments, the processor or the electronic device is configured to perform the following steps: inputting the network throughput at the third moment, the second time length variation information, and the target decision bit rate at the first moment to a second model simultaneously, to cause the second model to output the first evaluation value.
In some embodiments, the processor or the electronic device is configured to perform the following steps:

inputting the network throughput at the third moment, the second time length variation information, and the target decision bit rate at the first moment to the first model simultaneously to obtain a target decision bit rate at the third moment; and
updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

In some embodiments, the processor or the electronic device is configured to perform the following steps:

inputting sample data to the first model in a first model training process, to cause the first model to output a plurality of second probabilities corresponding to a plurality of second decision bit rates, the sample data including a historical decision bit rate, historical buffer time length information, historical buffer time length variation information, and a historical network throughput;

determining a sample target bit rate, the sample target bit rate being a second decision bit rate whose second probability meets a second target condition;

acquiring sample time length variation information of the buffer simulation module in the simulated interactive environment by inputting the sample target bit rate to the simulated interactive environment;

inputting the sample target bit rate, the sample time length variation information, and a network bandwidth at a next video data transmission moment to a second model, to cause the second model to output a second evaluation value; and

updating the model parameter of the first model based on the second evaluation value.

The present disclosure provides a computer program product. Instructions in the computer program product, when executed by a processor of an electronic device, can cause the processer or the electronic device to perform the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the electronic device according to claim 17.

In some embodiments, the processor or the electronic device is configured to perform the following steps: updating a model parameter of the bit rate decision model based on the target decision bit rate at the fifth moment and a network throughput at a seventh moment, the seventh moment being a next video data transmission moment of the fifth moment.

FIG. 12 is a sample graph of bandwidth over time. Referring to FIG. 12, a waveform with great fluctuations is selected for verification of the sine-wave network bandwidth. The horizontal coordinate in the figure is time in seconds; curve a is the real bandwidth variation in Mbps; curve b is the buffer time length variation in seconds; curve c is the bit rate selected by the model, in Mbps; curve d is the actual throughput for sending video data, in Mbps. It can be seen that the video bit rate control method provided by the present disclosure can make the actual throughput for sending video data follow the real bandwidth well, so that the throughput for sending video data is almost equal to the actual unpredictable network bandwidth, while keeping the amount of data stored in the buffer at a relatively low level, which ensures both the throughput for sending live video and the real-time performance of the live video streaming.

A person skilled in the art can easily think of other implementation solutions of the present disclosure after considering the specification and practicing the disclosure herein. The present disclosure is intended to cover any variations, purposes or applicable changes of the present disclosure. Such variations, purposes or applicable changes follow the general principle of the present disclosure and include common knowledge or conventional technical means in the technical field which is not disclosed in the present disclosure. The specification and embodiments are merely considered as illustrative, and the real scope and spirit of the present disclosure are pointed out by the appended claims.

It should be noted that, the present disclosure is not limited to the precise structures that have been described above and shown in the accompanying drawings, and can be modified and changed in many ways without departing from the scope of the present disclosure. The scope of the present disclosure is defined by the appended claims.

## Claims

1. A method for training a bit rate decision model, applied to an electronic device, comprising:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

2. The method according to claim 1, wherein the simulated interactive environment further comprises an encoder simulation module and a transmitting simulation module, and said acquiring second time length variation information by inputting the target decision bit rate at the first moment to the simulated interactive environment comprises:

inputting the target decision bit rate at the first moment to the encoder simulation module, to cause the encoder simulation module to transmit video data of the target decision bit rate at the first moment to the buffer simulation module;

extracting the video data from the buffer simulation module based on a rate indicated by the transmitting simulation module; and

acquiring the second time length variation information based on a storage capacity difference of the buffer simulation module for the video data between the first moment and the third moment.

3. The method according to claim 1, wherein the network throughput comprises a first network throughput and a second network throughput, the first network throughput is a network throughput captured within a time range of an interval between two video frames, and the second network throughput is a network throughput within a bit rate decision interval; and

the time length variation information of the buffer simulation module comprises first buffer time length variation information and second buffer time length variation information, the first buffer time length variation information is buffer time length variation information captured within the time range of the interval between two video frames, and the second buffer time length variation information is buffer time length variation information within the bit rate decision interval.

4. The method according to claim 1, wherein said acquiring a first evaluation value of the target decision bit rate at the first moment based on a network throughput at the third moment, the second time length variation information, and the target decision bit rate at the first moment comprises:

inputting the network throughput at the third moment, the second time length variation information, and the target decision bit rate at the first moment to a second model simultaneously, to cause the second model to output the first evaluation value.

5. The method according to claim 4, wherein after said updating a model parameter of the first model based on the first evaluation value, the method further comprises:

inputting the network throughput at the third moment, the second time length variation information, and the target decision bit rate at the first moment to the first model simultaneously to obtain a target decision bit rate at the third moment; and

updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

6. The method according to claim 1, wherein before said inputting a network throughput at a first moment, first time length variation information, and a target decision bit rate at a second moment to a first model simultaneously, the method further comprises:

inputting sample data to the first model in a first model training process, to cause the first model to output a plurality of second probabilities corresponding to a plurality of second decision bit rates, the sample data comprising a historical decision bit rate, historical buffer time length information, historical buffer time length variation information, and a historical network throughput;

determining a sample target bit rate, the sample target bit rate being a second decision bit rate whose second probability meets a second target condition;

acquiring sample time length variation information of the buffer simulation module in the simulated interactive environment by inputting the sample target bit rate to the simulated interactive environment;

inputting the sample target bit rate, the sample time length variation information, and a network bandwidth at a next video data transmission moment to a second model, to cause the second model to output a second evaluation value; and

updating the model parameter of the first model based on the second evaluation value.

7. A method for bit rate deciding, applied to an electronic device, comprising:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the method according to claim 1.

8. The method according to claim 7, wherein after said adjusting a bit rate of video data based on the target decision bit rate at the fifth moment, the method further comprises:

updating a model parameter of the bit rate decision model based on the target decision bit rate at the fifth moment and a network throughput at a seventh moment, the seventh moment being a next video data transmission moment of the fifth moment.

9. An apparatus for training a bit rate decision model, comprising:

a first probability outputting unit, configured to input a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

a first target decision bit rate determining unit, configured to determine a target decision bit rate at the first moment, the target decision bit rate at the first moment being a first decision bit rate whose first probability meets a first target condition;

a time length variation information acquiring unit, configured to acquire second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

an evaluation value acquiring unit, configured to acquire a first evaluation value based on a network throughput at the third moment, the second time length variation information, and the target decision bit rate at the first moment, the first evaluation value being an evaluation value of the target decision bit rate at the first moment; and

a model parameter updating unit, configured to update a model parameter of the first model based on the first evaluation value until any iteration process meets a first iteration ending condition, to obtain a bit rate decision model, the bit rate decision model being the first model obtained by the iteration process that meets the first iteration ending condition.

10. The apparatus according to claim 9, wherein the simulated interactive environment further comprises an encoder simulation module and a transmitting simulation module, and the time length variation information acquiring unit comprises:

a video data transmitting subunit, configured to input the target decision bit rate at the first moment to the encoder simulation module, to cause the encoder simulation module to transmit video data of the target decision bit rate at the first moment to the buffer simulation module;

a video data extracting subunit, configured to extract the video data from the buffer simulation module based on a rate indicated by the transmitting simulation module; and

a time length variation information acquiring subunit, configured to acquire the second time length variation information based on a storage capacity difference of the buffer simulation module for the video data between the first moment and the third moment.

11. The apparatus according to claim 9, wherein the network throughput comprises a first network throughput and a second network throughput, the first network throughput is a network throughput captured within a time range of an interval between two video frames, and the second network throughput is a network throughput within a bit rate decision interval; and

the time length variation information of the buffer simulation module comprises first buffer time length variation information and second buffer time length variation information, the first buffer time length variation information is buffer time length variation information captured within the time range of the interval between two video frames, and the second buffer time length variation information is buffer time length variation information within the bit rate decision interval.

12. The apparatus according to claim 9, wherein the evaluation value acquiring unit is configured to input the network throughput at the third moment, the second time length variation information, and the target decision bit rate at the first moment to a second model simultaneously, to cause the second model to output the first evaluation value.

13. The apparatus according to claim 12, further comprising:

a third moment target bit rate decision determining unit, configured to input the network throughput at the third moment, the second time length variation information, and the target decision bit rate at the first moment to the first model simultaneously to obtain a target decision bit rate at the third moment; and

a decision evaluation model determining unit, configured to update a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

14. The apparatus according to claim 9, wherein the first probability outputting unit is further configured to input sample data to the first model in a first model training process, to cause the first model to output a plurality of second probabilities corresponding to a plurality of second decision bit rates, the sample data comprising a historical decision bit rate, historical buffer time length information, historical buffer time length variation information, and a historical network throughput;

the first target decision bit rate determining unit is further configured to determine a sample target bit rate, the sample target bit rate being a second decision bit rate whose second probability meets a second target condition;

the time length variation information acquiring unit is further configured to acquire sample time length variation information of the buffer simulation module in the simulated interactive environment by inputting the sample target bit rate to the simulated interactive environment;

the evaluation value acquiring unit is further configured to input the sample target bit rate, the sample time length variation information, and a network bandwidth at a next video data transmission moment to a second model, to cause the second model to output a second evaluation value; and

the model parameter updating unit is further configured to update the model parameter of the first model based on the second evaluation value.

15. A bit rate deciding apparatus, comprising:

a second probability outputting unit, configured to input a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

a second target decision bit rate determining unit, configured to determine a target decision bit rate at the fifth moment, the target decision bit rate at the fifth moment being a third decision bit rate whose third probability meets a third target condition; and

a bit rate adjusting unit, configured to adjust a bit rate of video data based on the target decision bit rate at the fifth moment, the bit rate decision model being a bit rate decision model trained by using the apparatus according to claim 9.

16. The bit rate deciding apparatus according to claim 15, further comprising:

a bit rate decision model updating unit, configured to update a model parameter of the bit rate decision model based on the target decision bit rate at the fifth moment and a network throughput at a seventh moment, the seventh moment being a next video data transmission moment of the fifth moment.

17. An electronic device, comprising:

a processor; and
a memory configured to store an instruction executable by the processor;
wherein the processor is configured to perform the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

18. The electronic device according to claim 17, wherein the simulated interactive environment further comprises an encoder simulation module and a transmitting simulation module, and the processor is configured to perform the following steps:

inputting the target decision bit rate at the first moment to the encoder simulation module, to cause the encoder simulation module to transmit video data of the target decision bit rate at the first moment to the buffer simulation module;

extracting the video data from the buffer simulation module based on a rate indicated by the transmitting simulation module; and

acquiring the second time length variation information based on a storage capacity difference of the buffer simulation module for the video data between the first moment and the third moment.

19. The electronic device according to claim 17, wherein the network throughput comprises a first network throughput and a second network throughput, the first network throughput is a network throughput captured within a time range of an interval between two video frames, and the second network throughput is a network throughput within a bit rate decision interval; and

the time length variation information of the buffer simulation module comprises first buffer time length variation information and second buffer time length variation information, the first buffer time length variation information is buffer time length variation information captured within the time range of the interval between two video frames, and the second buffer time length variation information is buffer time length variation information within the bit rate decision interval.

20. The electronic device according to claim 17, wherein the processor is configured to perform the following step: inputting the network throughput at the third moment, the second time length variation information, and the target decision bit rate at the first moment to a second model simultaneously, to cause the second model to output the first evaluation value.

21. The electronic device according to claim 20, wherein the processor is configured to perform the following step:

inputting the network throughput at the third moment, the second time length variation information, and the target decision bit rate at the first moment to the first model simultaneously to obtain a target decision bit rate at the third moment; and
updating a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment.

22. The electronic device according to claim 17, wherein the processor is configured to perform the following step:

inputting sample data to the first model in a first model training process, to cause the first model to output a plurality of second probabilities corresponding to a plurality of second decision bit rates, the sample data comprising a historical decision bit rate, historical buffer time length information, historical buffer time length variation information, and a historical network throughput;
determining a sample target bit rate, the sample target bit rate being a second decision bit rate whose second probability meets a second target condition;
acquiring sample time length variation information of the buffer simulation module in the simulated interactive environment by inputting the sample target bit rate to the simulated interactive environment;
inputting the sample target bit rate, the sample time length variation information, and a network bandwidth at a next video data transmission moment to a second model, to cause the second model to output a second evaluation value; and
updating the model parameter of the first model based on the second evaluation value.

23. An electronic device, comprising:

a processor; and
a memory configured to store an instruction executable by the processor;
wherein the processor is configured to perform the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;
determining a target decision bit rate at the fifth moment, the target decision bit rate at the fifth moment being a third decision bit rate whose third probability meets a third target condition; and
adjusting a bit rate of video data based on the target decision bit rate at the fifth moment, the bit rate decision model being a bit rate decision model trained by using the electronic device according to claim 17.

24. The electronic device according to claim 23, wherein the processor is configured to perform the following step: updating a model parameter of the bit rate decision model based on the target decision bit rate at the fifth moment and a network throughput at a seventh moment, the seventh moment being a next video data transmission moment of the fifth moment.

25. A storage medium, wherein instructions in the storage medium, when executed by a processor of an electronic device, cause the electronic device to be capable of performing the following steps:

inputting a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment;

determining a target decision bit rate at the first moment, the target decision bit rate at the first moment being a first decision bit rate whose first probability meets a first target condition;

acquiring second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment;

acquiring a first evaluation value based on a network throughput at the third moment, the second time length variation information, and the target decision bit rate at the first moment, the first evaluation value being an evaluation value of the target decision bit rate at the first moment; and

updating a model parameter of the first model based on the first evaluation value until any iteration process meets a first iteration ending condition, to obtain a bit rate decision model, the bit rate decision model being the first model obtained by the iteration process that meets the first iteration ending condition.

26. A storage medium, wherein instructions in the storage medium, when executed by a processor of an electronic device, cause the electronic device to be capable of performing the following steps:

inputting a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment;

determining a target decision bit rate at the fifth moment, the target decision bit rate at the fifth moment being a third decision bit rate whose third probability meets a third target condition; and

adjusting a bit rate of video data based on the target decision bit rate at the fifth moment, the bit rate decision model being a bit rate decision model trained by using the storage medium according to claim 25.

Long-interval          Short-interval
scale feature            scale feature

$B_l$      $R$      $T_l$         $B_s$      $\Delta B$      $T_s$

Number
of sample
points in
time
dimension

$S_{len}$

Number of features $S_{num}$

**FIG. 1**

Environment

Bit rate
selection

Network
bandwidth

Buffer simulation
module

Encoder
simulation module

Transmitting
module

••••

Transmitt-
-ing rate

**FIG. 2**

Inputting, by an electronic device, a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment

301

Determining, by the electronic device, a target decision bit rate at the first moment, the target decision bit rate at the first moment being a first decision bit rate whose first probability meets a first target condition

302

Acquiring, by the electronic device, second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment

303

Acquiring, by the electronic device, a first evaluation value based on a network throughput at the third moment, the second time length variation information, and the target decision bit rate at the first moment, the first evaluation value being an evaluation value of the target decision bit rate at the first moment

304

Updating, by the electronic device, a model parameter of the first model based on the first evaluation value until any iteration process meets a first iteration ending condition, to obtain a bit rate decision model, the bit rate decision model being the first model obtained by the iteration process that meets the first iteration ending condition

305

**FIG. 3**

Inputting, by an electronic device, a network throughput at a fifth moment, first parameter variation information, and a target decision bit rate at a sixth moment to a bit rate decision model simultaneously, to cause the bit rate decision model to output a plurality of third probabilities corresponding to a plurality of third decision bit rates, wherein the sixth moment is a previous bit rate decision moment of the fifth moment, and the first parameter variation information is parameter variation information of a buffer at the fifth moment

401

Determining, by the electronic device, a target decision bit rate at the fifth moment, the target decision bit rate at the fifth moment being a third decision bit rate whose third probability meets a third target condition

402

Aadjusting, by the electronic device, a bit rate of video data based on the target decision bit rate at the fifth moment, the bit rate decision model being a bit rate decision model trained by using the foregoing method for training a bit rate decision model

403

**FIG. 4**

Inputting, by an electronic device, a network throughput at a first moment, first time length variation information, and a target decision bit rate at a second moment to a first model simultaneously, to cause the first model to output a plurality of first probabilities corresponding to a plurality of first decision bit rates, wherein the second moment is a previous bit rate decision moment of the first moment, and the first time length variation information is time length variation information of a buffer simulation module in a simulated interactive environment at the first moment

501

Determining, by the electronic device, a target decision bit rate at the first moment, the target decision bit rate at the first moment being a first decision bit rate whose first probability meets a first target condition

502

Acquiring, by the electronic device, second time length variation information by inputting the target decision bit rate at the first moment to the simulated interactive environment, wherein the second time length variation information is time length variation information of the buffer simulation module in the simulated interactive environment at a third moment, and the third moment is a next video data transmission moment of the first moment

503

Inputting, by the electronic device, a network throughput at the third moment, the second time length variation information, and the target decision bit rate at the first moment to a second model simultaneously, to cause the second model to output a first evaluation value

504

Updating, by the electronic device, a model parameter of the first model based on the first evaluation value until any iteration process meets a first iteration ending condition, to obtain a bit rate decision model, the bit rate decision model being the first model obtained by the iteration process that meets the first iteration ending condition

505

Inputting, by the electronic device, the network throughput at the third moment, the second time length variation information, and the target decision bit rate at the first moment to the first model simultaneously to obtain a target decision bit rate at the third moment

506

Updating, by the electronic device, a model parameter of the second model based on a network throughput at a fourth moment, third time length variation information, and the target decision bit rate at the third moment until any iteration process meets a second iteration ending condition, to obtain a decision evaluation model, wherein the decision evaluation model is the second model obtained by the iteration process that meets the second iteration ending condition, the fourth moment is a next video data transmission moment of the third moment, and the third time length variation information is time length variation information of the buffer simulation module in the simulated interactive environment at the fourth moment

507

**FIG. 5**

**FIG. 6**

**FIG. 7**

Apparatus for training a bit rate
decision model

| First probability output unit | 801 |

| First target decision bit rate determining unit | 802 |

| Time length variation information determining unit | 803 |

| Evaluation value acquiring unit | 804 |

| Model parameter updating unit | 805 |

**FIG. 8**

Bit rate deciding apparatus

| Second probability output unit | 901 |

| Second target decision bit rate determining unit | 902 |

| Bit rate adjusting unit | 903 |

**FIG. 9**

**FIG. 10**

**FIG. 11**

**FIG. 12**

## INTERNATIONAL SEARCH REPORT

| International application No. |
|---|
| **PCT/CN2020/129671** |

**A. CLASSIFICATION OF SUBJECT MATTER**

H04N 21/2662(2011.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; SIPOABS; EPTXT; USTXT; WOTXT; CNKI: 码率, 比特率, 吞吐量, 概率, 缓冲区, 训练, 模型, 视频, 神经网络, bit rate, throughput, probability, buffer, train, model, video, neural network, advantage actor critic

**C. DOCUMENTS CONSIDERED TO BE RELEVANT**

| Category* | Citation of document, with indication, where appropriate, of the relevant passages | Relevant to claim No. |
|---|---|---|
| PX | CN 111031387 A (NANJING UNIVERSITY) 17 April 2020 (2020-04-17) description paragraphs 37-61 | 1-26 |
| X | CN 109218744 A (HUAZHONG UNIVERSITY OF SCIENCE AND TECHNOLOGY) 15 January 2019 (2019-01-15) description, paragraphs 31-77 | 1-26 |
| X | CN 108063961 A (UITV MEDIA INC.) 22 May 2018 (2018-05-22) description, paragraphs [0043]-[0094] | 1-26 |
| A | US 7400588 B2 (THOMSON LICENSING) 15 July 2008 (2008-07-15) entire document | 1-26 |
| A | WO 2019197715 A1 (NOKIA TECHNOLOGIES OY) 17 October 2019 (2019-10-17) entire document | 1-26 |
| A | CN 110149534 A (SHENZHEN INSTITUTE OF BIG DATA RESEARCH) 20 August 2019 (2019-08-20) entire document | 1-26 |
| A | CN 109690576 A (DEEPMIND TECHNOLOGIES LIMITED) 26 April 2019 (2019-04-26) entire document | 1-26 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 February 2021** | **20 February 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/129671** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 101188752 A (FANG, Chun) 28 May 2008 (2008-05-28)<br>      entire document | 1-26 |

Form PCT/ISA/210 (second sheet) (January 2015)

### INTERNATIONAL SEARCH REPORT
Information on patent family members

| International application No. |
| --- |
| **PCT/CN2020/129671** |

| Patent document cited in search report | | | Publication date (day/month/year) | Patent family member(s) | | | Publication date (day/month/year) |
| --- | --- | --- | --- | --- | --- | --- | --- |
| CN | 111031387 | A | 17 April 2020 | CN | 111031387 | B | 04 December 2020 |
| CN | 109218744 | A | 15 January 2019 | CN | 109218744 | B | 22 November 2019 |
| CN | 108063961 | A | 22 May 2018 | CN | 108063961 | B | 31 July 2020 |
| US | 7400588 | B2 | 15 July 2008 | US | 2005025053 | A1 | 03 February 2005 |
| WO | 2019197715 | A1 | 17 October 2019 | None | | | |
| CN | 110149534 | A | 20 August 2019 | None | | | |
| CN | 109690576 | A | 26 April 2019 | US | 2019236482 | A1 | 01 August 2019 |
| | | | | JP | 2019525329 | A | 05 September 2019 |
| | | | | KR | 20190028531 | A | 18 March 2019 |
| | | | | EP | 3485432 | A1 | 22 May 2019 |
| | | | | WO | 2018017546 | A1 | 25 January 2018 |
| CN | 101188752 | A | 28 May 2008 | None | | | |

Form PCT/ISA/210 (patent family annex) (January 2015)

**EP 3 968 648 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010046898